# EUROPEAN PATENT APPLICATION

(11) **EP 4 376 376 A1**
(43) Date of publication of application: **29.05.2024**
(21) Application number: 22208859.3
(22) Date of filing: 22.11.2022
(51) Int. Cl.: H04L 43/0852, H04L 47/28, H04L 47/30, H04L 47/17, H04L 47/11, H04L 47/31, H04L 47/10, H04L 47/263

(54) **NETWORK QUEUE CONGESTION FEEDBACK FOR A DISTRIBUTED REAL-TIME APPLICATION**

(71) Applicant: Deutsche Telekom AG, 53113 Bonn (DE)
(72) Inventor: SCHNIEDERS, Dominik, 52078 Aachen (DE)
(74) Representative: RDL Patentanwälte PartG mbB

(57) **Abstract**

A method for operating a node of cellular network, wherein a node of a cellular network receives a plurality of IP packets from a sender of a distributed real-time application, inserts the received IP packets into a queue, extracts the inserted IP packets from the queue and transmits the extracted IP-packets to a receiver of the distributed real-time application the node measures queue times of the IP packets between a respective insertion into the queue and a respective extraction from the queue, randomly selects a calculated percentage of the extracted IP packets and marks each randomly selected IP packet when a measured queue time corresponds to a congestion of the queue, the percentage being calculated dependent of a marking propability function; a method for operating a distributed real-time application and a computer program product.

## Description

The invention relates to a method for operating a node of a cellular network, wherein a node of a cellular network receives a plurality of IP packets from a sender of a distributed real-time application, inserts the received IP packets into a queue, extracts the inserted IP packets from the queue and transmits the extracted IP-packets to a receiver of the distributed real-time application, the node measures queue times of the IP packets between a respective insertion into the queue and a respective extraction from the queue, randomly selects a calculated percentage of the extracted IP packets and marks each randomly selected IP packet when a measured queue time corresponds to a congestion of the queue, the percentage being calculated dependent of a marking probability function. The invention further relates to a method for operating a distributed real-time application and a computer program product.

A method as specified above for operating a node of a cellular network is known, e.g., from the whitepaper "Enabling time-critical applications over 5G with rate adaption" published in May 2021 by Ericsson and Deutsche Telekom. Such methods support distributed real-time applications transmitting data packets via a communication connection provided by a cellular network.

Distributed real-time applications comprise driving assistance systems, remotely operated vehicles, remote rendering systems, augmented or virtual reality applications and the like. Distributed real-time applications may be also referred to as near-real-time-applications, time-critical applications or latency-critical applications.

A distributed real-time application suffers from and may even fail due to a high latency and/or a high jitter, i.e., variability of the latency, of the communication connection. The latency of the communication connection is essentially caused by a queue time, i.e. a time interval required for IP packets to pass through a queue provided by a node of the cellular network.

Particularly, the marking probability function may be a step function being constant 0% below a threshold queue time and constant 100% above the threshold queue time. A marking probability function of this type allows for indicating very sensitively a congestion of the queue but fails to reflect a changing congestion of the queue, i.e., a gradual increase or decrease of the congestion of the queue.

Alternatively, the marking probabiliy function may be a "linearized" step function being constant 0% below a first threshold queue time, constant 100% above a second threshold queue time and linearly increasing from 0% to 100% between the first threshold queue time and the second threshold queue time. A marking probalitiy function of this type allows for reflecting a changing congestion of the queue but fails to indicate very sensitively a congestion of the queue.

It is therefore an object of the invention to suggest a method for operating a node of a cellular network, which allows for both indicating very sensitively a congestion of a queue and reflecting a changing congestion of the queue. Further objects of the invention are suggesting a method for operating a distributed real-time application and providing a computer program product.

A first aspect of the invention is a method for operating a node of a cellular network, wherein a node of a cellular network receives a plurality of IP packets from a sender of a distributed real-time application, inserts the received IP packets into a queue, extracts the inserted IP packets from the queue and transmits the extracted IP-packets to a receiver of the distributed real-time application, the node measures queue times of the IP packets between a respective insertion into the queue and a respective extraction from the queue, randomly selects a calculated percentage of the extracted IP packets and marks each randomly selected IP packet when a measured queue time corresponds to a congestion of the queue, the percentage being calculated dependent of a marking probability function. The sender sends a plurality of data packets to the receiver, e.g., each data packet being an i-frame or a p-frame of a video stream. Each data packet is converted into a plurality of IP packets according to the TCP/IP (Transmission Control Protocol/Internet Protocol).

The queue is a FIFO (First In First Out)-queue and delays a transmission of the IP packets. The insertion of an IP packet comprises appending the IP packet to a tail of the queue. The extraction of an IP packet comprises removing the IP packet from a head of the queue. The queue time is a time required by an IP packet passing the queue. Of course, the queue time depends on a number of IP packets waiting for extraction. The more IP packets are waiting in the queue for extraction, i.e., the longer the queue is, the more time an IP packet needs for passing the queue. The queue is considered congested when queue times of IP packets exceed a predetermined queue time, i.e., a threshold queue time. Marking IP packets allows for giving a queue congestion feedback to the distributed real-time application.

According to the invention, the percentage is calculated dependent of a marking probability function defined over a time domain having four subsequent separate time ranges, two subsequent time ranges joining in a time point. Four subsequent time ranges offer enough degrees of freedom for constructing a marking probability function indicating very sensitively a congestion of the queue and, at the same time, reflecting a changing congestion of the queue.

In an embodiment, the marking probability function is 0% for a queue time in a first time range below a lowest first time point, the first time range corresponding to a non-congestion of the queue. Measured queue times in the first time range indicate the queue not to be congested. No IP packet is marked by the node.

The first time point may be in a range from 2 ms to 8 ms and preferably is 5 ms. In other words, the queue is considered congested when the queue causes longer delays than 5 ms or about 5 ms.

Preferably, an IP packet is marked when a measured queue time of the IP packet exceeds the first time point and a measured queue time of a preceding IP packet is below the first time point. The marked IP packet is an exception from the random selection of IP packets. The marked IP packet precisely indicates a beginning congestion of the queue. The marked IP packet avoids a late indication of the beginning congestion due to a random selection of a late IP packet.

Preferably, the marking probability function is smooth above the first time point. The smooth function is both continuous and differentiable, i.e., has neither steps nor apexes. Accordingly, the marked percentage of the IP packets also does not have steps or apexes. The smoothness of the marking probability function facilitates a smooth reaction of the distributed real-time application to marked IP packets.

In another embodiment, the marking probability function is 100% for a queue time in a fourth time range above a highest third time point, the fourth time range corresponding to a severe congestion of the queue. Each IP packet is marked by the node. Measured queue times in the fourth time range indicate the queue to be severely congested. The severe congestion of the queue may cause a malfunction of the distributed real-time application. Obviously the marking probability function does not provide a congestion change feedback in the fourth time range.

The third time point may be in a range from 60 ms to 100 ms and preferably is 80 ms. In other words, the queue is considered severely congested when the queue causes longer delays than 80 ms or about 80 ms.

The marking probability function preferably is strongly increasing from 0% to 50% for a queue time in a second time range above the lowest first time point and below a middle second time point, the second time range corresponding to a weak congestion of the queue. The strong increase of the marking probability function in the second time range provides a very sensitive indication of a congestion of the queue at the very beginning of the congestion.

The marking probability function advantageously is weakly increasing from 50% to 100% for a queue time in a third time range above the middle second time point and below the highest third time point, the third time range corresponding to a strong congestion of the queue. The weak increase of the marking probability function in the third time range provides a very sensitive reflection of a changing congestion of the queue for a relatively advanced congestion of the queue.

The second time point may be in a range from 10 ms to 20 ms and preferably is 15 ms. In other words, the queue is considered weakly congested when the queue causes delays longer than 5 ms or about 5 ms and shorter than 15 ms or about 15 ms. The queue is considered strongly congested when the queue causes delays longer than 15 ms or about 15 ms and shorter than 80 ms or about 80 ms.

Marking the IP packet may comprise setting ECN bits in an IP header of the IP packet. The ECN bits may be set according to the low-latency, low-loss, scalable throughput (L4S) method for radio access networks (RAN) which is described in the afore-mentioned whitepaper.

In favorable embodiments, a terminal device executes an application frontend of the distributed real-time application as one of the sender and the receiver, an edge cloud server executes an application backend of the distributed real-time application as the other one of the sender and the receiver and the node of the cellular network provides the terminal device with a radio connection as the communication connection. The edge cloud server is arranged close to a transceiver base station (BTS) of the cellular network. A constellation comprising a terminal device, an edge cloud server and a radio connection allows for short round trip times (RTT) and, hence, favors a distributed real-time application.

The cellular network may assign a QoS feature to the communication connection or the communication connection to a slice of the cellular network or actively reduce a jitter of the communication connection by cooperating with the distributed real-time application. In other words, the communication connection may provide a low latency for the distributed real-time application. The low latency may be based on the QoS (Quality of Service) feature booked by a user of the terminal device. The terminal device may generally be referred to as user equipment (UE) and particularly be configured as a smartphone, a tablet, a notepad, a smart device and the like.

The low latency may also be based on slicing, i.e., IP subnets reserved for the distributed real-time application, or on a reserved queue for the distributed real-time application. The low latency may further be based on a cooperation of the cellular network and the distributed real-time application, the cooperation being established by a communication between the cellular network and the distributed real-time application.

Another aspect of the invention is a method for operating a distributed real-time application, wherein a receiver of a distributed real-time application receives a plurality of IP packets transmitted by a sender of the distributed real-time application via a communication connection provided by a cellular network and the receiver determines a percentage of IP packets marked by a node of the cellular network and causes the sender to adjust a transmission rate of transmitted data packets or a size of transmitted data packets resulting in a decreased rate of transmitted IP packets. The distributed real-time application adapts to the percentage of marked IP packets in order to prevent, tolerate or reduce a congestion of the queue.

According to the invention, the node carries out a method according to an embodiment of the invention for operating a node of a cellular network. The distributed real-time application very adequately adapts to a different degree of congestion of the queue.

Adaption of the distributed real-time application may comprise distributing an i-frame to a plurality of p-frames in order to avoid a strong variability of sizes of transmitted data packets in case the distributed real-time application transmits a video stream.

The distributed real-time application may increase a rate or a size of transmitted data packets until a congestion of the queue begins which is very sensitively indicated by the second time range of the marking probability function. When a beginning congestion of the queue is indicated the distributed real-time application may immediately reduce a rate or size of transmitted data packets until the congestion stops without unintentionally congesting the queue. As a consequence, an overshooting of the distributed real-time application is prevented when the capacity of the communication connection is constant. Apart from that, the distributed real-time application is enabled to benefit maximally from a capacity of the communication connection.

On the other hand, the capacity of the communication connection may be variably affected by an external influence. The distributed real-time application may decrease a rate or a size of transmitted data packets until a congestion of the queue reduces which is reflected by the third time range of the marking probability function. When a changing congestion of the queue is reflected the real-time application may reduce or increase a rate or size of transmitted data packets dependent of the variable external influence.

A third aspect of the invention is a computer program product, comprising a storage medium storing a program code. The storage medium may be configured as a CD (compact disc), a DVD (digital versatile disk), a USB (universal serial bus), a hard drive, a RAM (random access memory) chip, a cloud storage and the like.

According to the invention, the program code causes a computing device to carry out a method according to an embodiment of the invention for operating a node of a cellular network when being executed by a processor of the computing device. The computing device provides a network queue congestion feedback and allows a distributed real-time application for adapting to a congestion of the queue.

An essential advantage of the inventive method for operating a node of cellular network is that the method allows for both indicating very sensitively a congestion of a queue and reflecting a changing congestion of the queue. The network congestion feedback provided by the node enables a distributed real-time application for adequately adapting to a congestion of the queue. Due to the network congestion feedback a latency and/or a jitter of the communication connection is reduced.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows an entity diagram of a cellular network comprising a node operated in a method according to an embodiment of the invention;
- Fig. 2: shows a graph of a marking probability function used by the node shown in Fig. 1.

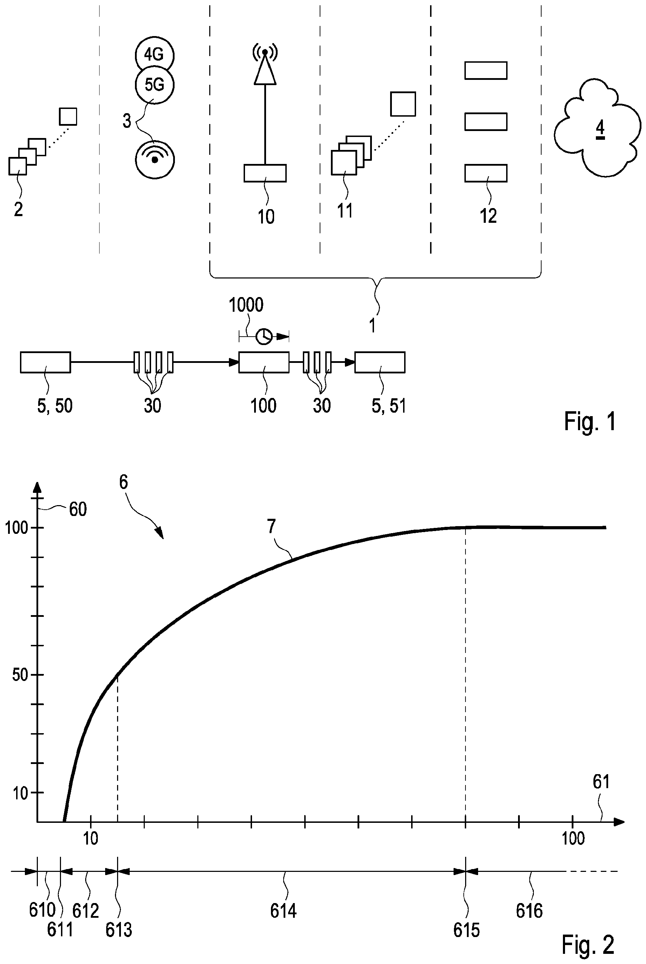

Fig. 1 schematically shows an entity diagram of a cellular network 1. The cellular network 1 comprises a backbone 12, an edge cloud server 11 and a node 10. The node 10 provides a queue 100 for IP packets 30. The cellular network 1 may be further connected to an internet 4.

A terminal device 2 may connect to the cellular network 1 via a communication connection 3. The communication connection may 3 may be a 4G connection, a 5G connection or a WLAN connection. The terminal device 2 may have a sender 50 of a distributed real-time application 5. The edge cloud server 11 may have a receiver 51 of the distributed real-time application 5.

The node 10 is operated in a method according to an embodiment of the invention as follows. Particularly, the node 10 may be a computing device with a computer program product which comprises a storage medium storing a program code. The program code causes the computing device to carry out the following method as the node 10 of the cellular network 1 when being executed by a processor of the computing device.

The terminal device 2 may execute an application frontend of the distributed real-time application 5 as one of the sender 50 and the receiver 51, the edge cloud 11 server may execute an application backend of the distributed real-time application 5 as the other one of the sender 50 and the receiver 51 and the node 10 of the cellular network 1 may provide the terminal device 2 with a radio connection as the communication connection 3.

The cellular network 1 may assign a QoS feature to the communication connection 3 or the communication connection 3 to a slice of the cellular network 1 or actively reduce a jitter of the communication connection 3 by cooperating with the distributed real-time application 5.

The node 10 of the cellular network 1 receives a plurality of IP packets 30 from the sender 50 of the distributed real-time application 5, inserts the received IP packets 30 into the queue 100, extracts the inserted IP packets 30 from the queue 100 and transmits the extracted IP packets 30 to the receiver 51 of the distributed real-time application 5.

The node 10 measures queue times 1000 of the IP packets 30 between a respective insertion into the queue 100 and a respective extraction from the queue 100, randomly selects a calculated percentage of the extracted IP packets 30 and marks each randomly selected IP packet 30 when a measured queue time 1000 corresponds to a congestion of the queue 100. Marking the IP packet 30 preferably comprises setting ECN bits in an IP header of the IP packet 30.

The percentage is calculated dependent of a marking probability function 7 defined over a time domain.

Fig. 2 shows a graph of the marking probability function 7 used by the node 10 shown in Fig. 1. The graph 6 comprises an abscissa 61 representing a time domain of the marking probability function 7 and indicating queue times 1000 in milliseconds (ms). The graph 6 further comprises an ordinate 60 indicating percentage values of the marking probability function 7.

The marking probability function 7 is defined over the time domain having four subsequent separate time ranges 610, 612, 614, 616. Two subsequent time ranges 610, 612, 614, 616 join in a time point 611, 613, 615.

The marking probability function 7 may be 0% for a queue time 1000 in a first time range 610 below a lowest first time point 611, the first time range 610 corresponding to a non-congestion of the queue 100. The first time point 611 may be in a range from 2 ms to 8 ms and preferably is 5 ms.

The marking probability function 7 may be 100% for a queue time 1000 in a fourth time range 616 above a highest third time point 615, the fourth time range 616 corresponding to a severe congestion of the queue 100. The third time point 615 may be in a range from 60 ms to 100 ms and preferably is 80 ms.

The marking probability function 7 may be strongly increasing from 0% to 50% for a queue time 1000 in a second time range 612 above the lowest first time point 611 and below a middle second time point 613, the second time range 612 corresponding to a weak congestion of the queue 100. The marking probability function 7 is weakly increasing from 50% to 100% for a queue time 1000 in a third time range 614 above the middle second time point 613 and below the highest third time point 615, the third time range 614 corresponding to a strong congestion of the queue 100. The second time point 613 may be in a range from 10 ms to 20 ms and preferably is 15 ms. The marking probability function 7 preferably is smooth over the time domain.

An IP packet 30 is marked when a measured queue time 1000 of the IP packet 30 exceeds the first time point 611 and a measured queue time 1000 of a preceding IP packet 30 is below the first time point 611.

The distributed real-time application may be operated in a method according to an embodiment of the invention as follows.

The receiver 51 of the distributed real-time application 5 receives the plurality of IP packets 30 transmitted by the sender 50 of the distributed real-time application 5 via the communication connection 3 provided by the cellular network 1.

The receiver 51 determines a percentage of IP packets 30 marked by the node 10 of the cellular network 1 operated as described above and causes the sender 50 to adjust a transmission rate of transmitted data packets or a size of transmitted data packets resulting in a decreased rate of transmitted IP packets 30.

### Reference Numerals

- 1: cellular network
- 10: node
- 100: queue
- 1000: queue time
- 11: edge cloud server
- 12: backbone
- 2: terminal device
- 3: communication connection
- 30: IP packet
- 4: internet
- 5: distributed real-time application
- 50: sender
- 51: receiver
- 6: graph
- 60: ordinate
- 61: abscissa
- 610: first time range
- 611: first time point
- 612: second time range#
- 613: second time point
- 614: third time range
- 615: third time point
- 616: fourth time range
- 7: marking probability function

## Claims

1. A method for operating a node (10) of a cellular network (1), wherein
- a node (10) of a cellular network (1) receives a plurality of IP packets (30) from a sender (50) of a distributed real-time application (5), inserts the received IP packets (30) into a queue (100), extracts the inserted IP packets (30) from the queue (100) and transmits the extracted IP packets (30) to a receiver (51) of the distributed real-time application (5);
- the node (10) measures queue times (1000) of the IP packets (30) between a respective insertion into the queue (100) and a respective extraction from the queue (100), randomly selects a calculated percentage of the extracted IP packets (30) and marks each randomly selected IP packet (30) when a measured queue time (1000) corresponds to a congestion of the queue (100);
- the percentage is calculated dependent of a marking probability function (7) defined over a time domain having four subsequent separate time ranges (610, 612, 614, 616), two subsequent time ranges (610, 612, 614, 616) joining in a time point (611, 613, 615).

2. The method according to claim 1, wherein the marking probability function (7) is 0% for a queue time (1000) in a first time range (610) below a lowest first time point (611), the first time range (610) corresponding to a non-congestion of the queue (100).

3. The method according to claim 2, wherein the first time point (611) is in a range from 2 ms to 8 ms and preferably is 5 ms.

4. The method according to claim 2 or 3, wherein an IP packet (30) is marked when a measured queue time (1000) of the IP packet (30) exceeds the first time point (611) and a measured queue time (1000) of a preceding IP packet (30) is below the first time point (611).

5. The method according to one of claims 2 to 4, wherein the marking probability function (7) is smooth above the first time point.

6. The method according to one of claims 1 to 5, wherein the marking probability function (7) is 100% for a queue time (1000) in a fourth time range (616) above a highest third time point (615), the fourth time range (616) corresponding to a severe congestion of the queue (100).

7. The method according to claim 6, wherein the third time point (615) is in a range from 60 ms to 100 ms and preferably is 80 ms.

8. The method according to one of claims 1 to 7, wherein the marking probability function (7) is strongly increasing from 0% to 50% for a queue time (1000) in a second time range (612) above the lowest first time point (611) and below a middle second time point (613), the second time range (612) corresponding to a weak congestion of the queue (100).

9. The method according to claim 8, wherein the marking probability function (7) is weakly increasing from 50% to 100% for a queue time (1000) in a third time range (614) above the middle second time point (613) and below the highest third time point (615), the third time range (614) corresponding to a strong congestion of the queue (100).

10. The method according to claim 8 or 9, wherein the second time point (613) is in a range from 10 ms to 20 ms and preferably is 15 ms.

11. The method according to one of claims 1 to 10, wherein marking the IP packet (30) comprises setting ECN bits in an IP header of the IP packet (30).

12. The method according to one of claims 1 to 11, wherein a terminal device (2) executes an application frontend of the distributed real-time application as one of the sender (50) and the receiver (51), an edge cloud (11) server executes an application backend of the distributed real-time application (5) as the other one of the sender (50) and the receiver (51) and the node (10) of the cellular network (1) provides the terminal device (2) with a radio connection as the communication connection (3).

13. The method according to claim 12, wherein the cellular network (1) assigns a QoS feature to the communication connection (3) or the communication connection (3) to a slice of the cellular network (1) or actively reduces a jitter of the communication connection (3) by cooperating with the distributed real-time application (5).

14. A method for operating a distributed real-time application (5), wherein
- a receiver (51) of a distributed real-time application (5) receives a plurality of IP packets (30) transmitted by a sender (50) of the distributed real-time application (5) via a communication connection (3) provided by a cellular network (1);
- the receiver (51) determines a percentage of IP packets (30) marked by a node (10) of the cellular network (1), the node (10) carrying out a method according to one of claims 1 to 13, and causes the sender (50) to adjust a transmission rate of transmitted data packets or a size of transmitted data packets resulting in a decreased rate of transmitted IP packets (30).

15. A computer program product, comprising a storage medium storing a program code, the program code causing a computing device to carry out a method according to one of claims 1 to 13 as a node (10) of a cellular network (1) when being executed by a processor of the computing device.
